# EUROPÄISCHE PATENTSCHRIFT

(11) **EP 2 989 281 B1**
(45) Veröffentlichungstag und Bekanntmachung des Hinweises auf die Patenterteilung: **13.09.2017**
(21) Anmeldenummer: 14715015.5
(22) Anmeldetag: 04.04.2014
(51) Int. Cl.: F16L 47/24, F16L 9/128, F16L 15/00, F16L 15/06, F16L 19/06, F16L 23/12, F16L 47/14, F16L 47/16

(54) **ROHRELEMENT MIT COMPOSITE-ROHR UND METALLVERBINDER**
PIPE ELEMENT HAVING A COMPOSITE PIPE AND A METAL CONNECTOR
ÉLÉMENT TUBULAIRE COMPRENANT UN TUBE EN MATIÈRE COMPOSITE ET UN RACCORD MÉTALLIQUE

(30) Priorität: 22.04.2013 DE 102013207206; 23.04.2013 US 201361815016 P
(43) Veröffentlichungstag der Anmeldung: 02.03.2016
(73) Patentinhaber: Voith Patent GmbH, 89522 Heidenheim (DE)
(72) Erfinder: BRÜHLER, Jürgen, 83301 Traunreut (DE); TICHELMANN, Patrick, 51643 Gummersbach (DE); SEIP, Benjamin, 82299 Türkenfeld (DE)
(86) Internationale Anmeldenummer: PCT/EP2014/056767
(87) Internationale Veröffentlichungsnummer: WO 2014/173653

(56) Entgegenhaltungen:
- EP-A1- 1 065 422
- US-A- 4 647 078
- US-A- 4 813 715
- US-A- 5 332 049
- US-A1- 2005 145 406

## Beschreibung

Die Erfindung betrifft ein Rohrelement, welches ein Rohr aus faserverstärktem Kunststoff und zumindest einen Metallverbinder aufweist, welcher so mit dem Rohr verbunden ist, dass die Verbindung Drehmomente und Axialkräfte übertragen kann, und welcher ein Gewinde, insbesondere ein konisches Gewinde, oder einen Flansch aufweist, mit dem der Metallverbinder mit einem anderen Metallverbinder verschraubt werden kann, um zwei Rohrelemente zu verbinden. Zusätzlich betrifft die Erfindung ein Verfahren zu Herstellung eines solchen Rohrelementes.

Solche Rohrelemente mit einem Rohr aus faserverstärktem Kunststoff, v.a aus CFK (Kohlefaser-verstärkter Kunststoff) und einem Metallverbinder zur Verbindung zweier Rohrelemente sind im Stand der Technik bekannt, beispielsweise bei Bohrgestängen für Erdölbohrungen, um leichtere Bohrgestänge als die bisher üblichen Stahl-Bohrgestänge bereitzustellen. CFK bietet hohe Festigkeit und Steifigkeit bei vergleichsweise geringem Gewicht. Es lässt sich allerdings nur sehr bedingt nachbearbeiten und es ist kaum möglich, tragfähige Verbindungsteile, wie z.B. Gewinde damit herzustellen. Daher kommen Metallverbinder zum Einsatz, die am Rohrende befestigt sind. Die Verbindung zwischen Metallverbinder und Kunststoffrohr erfolgt im Stand der Technik über Stifte, die radial eingesetzt sind. Um hohe Drehmomente und Kräfte übertragen und den widrigen Umgebungsbedingungen standhalten zu können, sind mehrere, ausreichend groß dimensionierte Stifte verteilt über den Umfang notwendig. Nachteilig ist, dass die Montage eines solchen Rohrelementes dadurch relativ aufwändig ist. Außerdem muss im Verbindungsbereich ausreichend Material vorhanden sein, sowohl im Kunststoffrohr als auch im Metallverbinder, damit die Schwächung durch die Löcher für die Stifte kompensierte werden kann. Dies führt zwangsläufig zu relativ dicken und voluminösen Verbindungsbereichen oder zu wenig belastbaren Rohrelementen. Eine weitere Lösung stellen Klebeverbindungen dar. Es ist allerdings schwer, diese in ihrer Qualität gesichert auszuführen.

Aus der US 4,813,715 ist ein faserverstärktes Rohr mit einem Metallverbinder bekannt, bei dem das Rohr in seinem Endbereich in axialer Richtung zwischen dem das Rohr außen umschließenden Metallverbinder und einem das Rohr außen umschließenden Sicherungsring in axialer Richtung eingespannt wird, indem der Metallverbinder und der Sicherungsring in axialer Richtung miteinander verschraubt werden. Aus der US2005/145406 ist ferner ein Datenübertragungsystem für Tiefbohrlochrohre bekannt.

Die Aufgabe der Erfindung ist es, ein Rohrelement mit einer einfacher zu montierenden, zuverlässigeren und weniger platzbeanspruchenden Verbindung zwischen Metallverbinder und faserverstärktem Kunststoffrohr bereitzustellen, sowie ein Verfahren zur Herstellung solcher Rohrelemente. Das erfindungsgemäße Rohrelement soll besonders für Bohrgestänge, wie sie beispielsweise beim Erdölbohren eingesetzt werden, oder für andere Anwendungen wie Antriebswellen oder wie Rohrverbindung zwischen Erdölquelle und Förderplattform, welche z.B. beim Offshore-Ölfördern als sogenannte Riser verwendet werden, geeignet sein.

Die Aufgabe wird für das Rohrelement erfindungsgemäß dadurch gelöst, dass der Metallverbinder mit einem Verbindungsbereich das Rohr außen umschließt, dass eine Gegenhülse vorhanden ist, die mit einem Verbindungsbereich Kontakt zur Innenseite des Rohres hat, und dass der Metallverbinder und die Gegenhülse je ein zylindrisches Gewinde aufweisen, über die sie miteinander verschraubt sind. Durch die zylindrische Verschraubung wird gewährleistet, dass die Verbindungsbereiche zuverlässig und definiert in Kontakt gebracht werden. Der Vorteil dieser Lösung ist, dass die Montage der Verbindung zwischen Metallverbinder und Composite-Rohr stark vereinfacht wird, indem nur zwei Metallbauteile miteinander verschraubt werden müssen. Das zylindrische Gewinde benötigt wenig Bauraum in radialer Richtung und ist damit sehr platzsparend bezüglich des Durchmessers, was eine sehr schlank ausgeführte Verbindung ermöglicht. Um größere Kräfte übertragen zu können, kann die Gewindelänge und/oder die Länge des Verbindungsbereiches am Rohr vergrößert werden.

Das Rohr weist bevorzugt eine Faserverstärkung aus Glasfasern oder Aramidfasern oder besonders bevorzugt aus Kohlefasern auf. Dabei sind die Fasern als Wickelung von Rovings oder Gewebe- oder Gelegebändern jeweils ein- oder mehrlagig und auch in Kombination angeordnet. Die Faserverstärkung ist von einer Kunststoffmatrix umgeben. Als Matrixmaterial sind Thermoplaste oder bevorzugt Duromere, wie Epoxidharz besonders geeignet. Das Matrixmaterial kann bereits auf der Faserverstärkung vor dem Wickeln vorhanden sein oder es wird beim oder nach dem Wickeln aufgetragen. Die Aushärtung bzw. Konsolidierung erfolgt durch eine thermische Behandlung im Ofen. Der Metallverbinder und die Gegenhülse sind bevorzugt aus Stahl, Stahlguss, Grauguss, Aluminiumlegierung oder Titan. Im Falle von Antriebswellen werden statt der konischen Gewinde zum Verbinden zweier Rohrelemente bevorzugt Flansche verwendet, über die die Rohrelemente miteinander verschraubt werden. Für solche Rohrelemente lässt sich die Erfindung ebenso vorteilhaft anwenden.

Weitere vorteilhafte Merkmale der erfindungsgemäßen Ausführung, die Qualität der Verbindung und die Montageeigenschaften verbessern, finden sich in den Unteransprüchen.

Um eine gute Kraftübertragung und somit eine zuverlässige und feste Verbindung zu erzielen, liegt die bevorzugte Länge des zylindrischen Gewindes am Metallverbinder und an der Gegenhülse im Bereich zwischen 10 und 500%, besonders bevorzugt zwischen 10% und 100% des Gewindedurchmessers. Die bevorzugte axiale Länge des Verbindungsbereiches, in dem das Rohr zwischen Metallverbinder und Gegenhülse eingeklemmt ist, beträgt zwischen 10 und 500%, besonders bevorzugt zwischen 100% und 500% des Gewindedurchmessers.

Das Rohrelement kann am zweiten Rohrende, das dem einen Metallverbinder gegenüberliegt, einen zweiten Metallverbinder haben, der genauso mit dem Rohr verbunden ist wie der erste Metallverbinder. So können mehrere Rohrelemente miteinander zu einem langen Strang, der Drehmomente und Axialkräfte übertragen kann, verbunden werden. Haben die Metallverbinder ein konisches Gewinde, so ist es von Vorteil, wenn der eine Metallverbinder ein konisches Innengewinde und der zweite Metallverbinder ein passendes konisches Außengewinde besitzt. Es können aber auch Rohrelemente mit je zwei konischen Innengewinden und mit je zwei konischen Außengewinden immer abwechselnd zu einem längeren Strang zusammengesetzt werden.

Besonders bevorzugt weist das Rohr auf der Außenseite einen Verbindungsbereich auf, der eine konisch zum Rohrende hin zulaufende Fläche darstellt und der mit dem Verbindungsbereich des Metallverbinders in Kontakt ist, wobei dieser Verbindungsbereich als entsprechend passende konisch geformte Fläche ausgebildet ist. Bezüglich der Verbindungsbereiche wird in dieser Anmeldung unter konisch verstanden, dass die Fläche entweder eine gerade Kegelform oder auch eine bauchige Kegelform hat. Die Oberfläche kann in axialer Richtung also nicht nur einen geraden sondern auch einen stetig gekrümmten Verlauf haben. Als konisch zulaufend wird verstanden, dass der Durchmesser der Fläche in axialer Richtung abnimmt, und als konisch erweiternd, dass der Durchmesser in axialer Richtung zunimmt.

Durch die konische Form wird beim Zusammenschrauben über das zylindrische Gewinde eine Flächenpressung auf den Verbindungsbereich des Rohres zwischen Metallverbinder und Gegenhülse erzeugt, wodurch die Verbindung höhere Kräfte übertragen kann. Zusätzlich zur Klemmung kann zwischen Metallverbinder und Rohr im Verbindungsbereich Kleber aufgebracht sein. Das erhöht die Festigkeit der Verbindung und kann für eine Abdichtung zwischen Innenraum des Rohres und Umgebung sorgen. Außerdem verringert der Klebstoff bei der Herstellung der Verbindung zwischen Rohr und Metallverbinder die Reibung zwischen den Teilen.

Bevorzugt beträgt der Steigungswinkel des Konus auf der Außenseite des Rohres im Verbindungsbereich mit dem Metallverbinder zwischen 0,1° und 30° bezogen auf die Achse des Rohres, besonders bevorzugt zwischen 0,5° und 5°. Somit kann eine besonders zuverlässige Verbindung erreicht werden. Ein zu flacher Winkel ermöglicht keine hohe Flächenpressung und ein zu steiler Winkel reduziert die verfügbare axiale Länge der Verbindungsfläche.

Um eine noch höhere Flächenpressung in der Verbindung zu erzielen oder als Alternative zur konischen Fläche auf der Außenseite des Rohres, kann das Rohr auf der Innenseite einen Verbindungsbereich aufweisen, der eine konisch zum Rohrende hin zulaufende Fläche darstellt und der mit dem Verbindungsbereich der Gegenhülse in Kontakt ist, wobei dieser als entsprechend passende konisch geformte Fläche ausgebildet ist. Auch hier kann Kleber zwischen Gegenhülse und Rohr aufgebracht sein.

Bevorzugt beträgt der Steigungswinkel des Konus auf der Innenseite des Rohres im Verbindungsbereich mit der Gegenhülse zwischen 0,1 und 30° bezogen auf die Achse des Rohres und besonders bevorzugt zwischen 0,5° und 5°.

Um das Wickeln des Rohres bei der Herstellung zu vereinfachen, kann ein Innenrohr vorhanden sein, insbesondere aus Metall oder faserverstärktem Kunststoff oder thermoplastischem Kunststoff und bevorzugt mit einer Beschichtung auf der Innenseite versehen, die aus einem gegen Öl oder Bohrflüssigkeit oder andere Chemikalien resistenteren Material als das Innenrohr besteht, wobei das Faserverbundrohr auf das Innenrohr aufgewickelt ist, um so die gesamte Rohrstruktur zu bilden, und wobei das Innenrohr eine geringere Wandstärke als das Faserverbundrohr hat. Alternativ zur Beschichtung kann das Innenrohr aus einem gegen Öl oder Bohrflüssigkeit oder andere Chemikalien resistenteren Werkstoff hergestellt sein.

Bei manchen Anwendungen, wie zum Beispiel bei Bohrgestängen sollen Daten oder elektrische Energie über die Rohrelemente übertragen werden. Dazu kann in der Wand des Rohres oder zwischen Innenrohr und Rohr ein Kabel vorhanden sein, das sich von einem Rohrende zum anderen Rohrende erstreckt und das mit einem Stecker verbunden, der sich innerhalb des Metallverbinders befindet und der geeignet ist, eine elektrische Verbindung zu einem anderen Stecker oder Kabel in einem weiterem Rohrelemente herzustellen, wenn das Rohrelement mit dem weiteren Rohrelement über das insbesondere konische Gewinde oder den Flansch verschraubt ist. Ein Vorteil ist, dass das Kabel in der Wand des Rohres geschützt ist. Der Stecker kann insbesondere ringförmig gestaltet sein. Unter Stecker wird hier allgemein ein Bauteil verstanden, das geeignet ist eine elektrische Verbindung herzustellen, mit der Daten oder Energie übertragen werden kann. Die elektrische Verbindung zwischen den Rohrelementen kann durch physischen Kontakt des Steckers mit einem Gegenkontakt hergestellt werden oder durch elektromagnetische Kopplung des Steckers an ein Gegenstück also drahtlos erfolgen. Dabei können auch mehrere Kabel und/oder mehrere Stecker an einem Rohrelement vorhanden sein.

Um den Stecker gegenüber dem Innenraum, in dem Öl oder ein anderes Medium fließt, zu schützen, kann die Gegenhülse ein an dem zum Verbindungsbereich gegenüberliegenden Ende der Gegenhülse angeordnetes Schutzschild aufweisen, welches derart ausgeführt ist, dass der Stecker in radialer Richtung gesehen vollständig zwischen Metallverbinder und Gegenhülse liegt, wenn das Rohrelement montiert ist.

Um das Kabel sicher vor Beschädigung beim Aufschrauben des Metallverbinders vom Rohr zum Stecker im Bereich des Metallverbinders zu führen hat die Gegenhülse bevorzugt eine axiale Nut im zylindrischen Gewinde oder eine axiale Längsbohrung im Material unter dem zylindrischen Gewinde. Die Nut ist leichter zu fertigen. Die Längsbohrung hat den Vorteil, dass das Gewinde dadurch nicht unterbrochen und nicht geschwächt wird.

Damit sich die zylindrische Schraubverbindung zwischen der Gegenhülse und dem Metallverbinder nicht wieder lockern kann, wenn mehrere Rohrelemente im Betrieb zusammen und auseinander geschraubt werden, ist es vorteilhaft, dass eine Verdrehsicherung zwischen Gegenhülse und Metallverbinder vorgesehen ist. Diese Verdrehsicherung kann insbesondere als Schweißnaht, bevorzugt an der Stirnfläche der Gegenhülse, ausgeführt sein. Die Schweißnaht kann ringförmig durchgehend oder unterbrochen oder als Reihe von Schweißpunkten ausgeführt werden. Alternativ kann die Verdrehsicherung auch als zumindest ein Stift ausgeführt sein, der axial in eine Bohrung zwischen Gegenhülse und Metallverbinder an der Stirnseite eingesetzt ist.

Da in manchen Anwendungen das Rohrelement von einem flüssigen Medium durchströmt wird, wie zum Beispiel Öl oder Bohrflüssigkeit, ist es wichtig, den Druckverlust gering zu halten. Dazu ist es vorteilhaft, wenn die Innenfläche der Gegenhülse ein in axialer Richtung komplett stetig verlaufendes Innenprofil ohne Kanten oder Stufensprünge aufweist. Dieser kontinuierliche düsenähnliche Verlauf führt zu einem strömungsoptimierten Rohrelement mit geringem Druckverlust im Bereich der Verbindungsstellen der verschiedenen Rohrelemente. Bisher bekannte Rohrelemente haben den Nachteil, dass sie im Bereich der Verbindungen größere Druckverluste verursachen. Durch die erfindungsgemäße Art der Verbindung zwischen Metallverbinder und Rohr ist es möglich, durch die Gegenhülse ein strömungsoptimiertes Innenprofil zu erzeugen.

Für das erfindungsgemäße Verfahren zur Herstellung eines oben beschriebenen Rohrelementes wird die Aufgabe dadurch gelöst,
- dass das Rohr durch Wickeln von Fasermaterial um einen Kern, insbesondere auf einem Innenrohr hergestellt wird,
- dass die Gegenhülse im Verbindungsbereich beim Herstellen des Rohres mit dem Fasermaterial überwickelt wird,
- dass Matrixmaterial zusammen mit oder nach dem Fasermaterial aufgebracht wird,
- dass das Rohr zusammen mit der Gegenhülse in einem Ofen thermisch behandelt wird, wobei das Matrixmaterial aushärtet oder konsolidiert,
- und dass der Metallverbinder mit seinem zylindrischen Gewinde (auf das zylindrische Gewinde der Gegenhülse aufgeschraubt wird.

Die Verfahrensschritte werden bevorzugt in der angegebenen Reihenfolge ausgeführt. Die thermische Behandlung besteht insbesondere darin, dass das Rohr auf eine Temperatur zwischen 50 und 250°C aufgeheizt wird. Durch das Überwickeln der Gegenhülse im Verbindungsbereich wird direkt ein guter flächiger Kontakt zwischen Rohr und Gegenhülse erzeugt, was sich positiv auf die spätere Festigkeit der Verbindung auswirkt. Eine Herstellung, bei der die Gegenhülse nach dem thermischen Behandeln im Ofen eingesetzt wird, ist nicht möglich, wenn der Verbindungsbereich auf der Innenseite des Rohres konisch zum Rohrende hin zulaufend ausgeführt ist. In diesem Fall ist eine Herstellung nur mit dem erfindungsgemäßen Verfahren möglich, bei dem die Gegenhülse bereits beim Wickeln des Rohres im Verbindungsbereich überwickelt wird.

Um ein Rohrelement mit Kabel und Stecker herzustellen, kann ein Kabel axial oder spiralförmig von einem Ende bis zum anderen Ende auf dem Innenrohr aufgebracht werden, bevor das Rohr durch Wickeln der Lagen hergestellt wird; der Stecker wird nach dem thermischen Behandeln im Ofen auf die Gegenhülse geschoben und mit dem Kabel elektrisch verbunden, bevor der Metallverbinder aufgeschraubt wird. So lässt sich in vereinfachter Weise auch ein Rohrelement mit elektrischer Daten- oder Energieverbindung herstellen. Alternativ kann das Kabel axial oder spiralförmig von einem Ende bis zum anderen Ende auf bereits gewickelten Lagen des Rohres aufgebracht werden, bevor das Rohr durch weiteres Wickeln fertiggestellt wird; die Montage des Steckers folgt wie oben beschrieben.

Anhand von Ausführungsbeispielen werden weitere vorteilhafte Merkmale der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden.
- **Fig.1a**: Ausführung eines erfindungsgemäßen Rohrelements mit Innenkonusgewinde - Längsschnitt
- **Fig.1b**: 3D-Darstellung angeschnitten zu 1a vor der Verschraubung
- **Fig.2a**: Ausführung eines erfindungsgemäßen Rohrelements mit Kabel und Stecker - 3D angeschnitten als Explosionsdarstellung
- **Fig.2b**: 3D-Darstellung angeschnitten zu 2b zusammenmontiert
- **Fig.3**: Verbindung zweier erfindungsgemäßer Rohrelemente
- **Fig.4**: Ausführung eines erfindungsgemäßen Rohrelementes mit Außenkonusgewinde und mit Verdrehsicherung durch Schweißnaht
- **Fig.5**: Weitere Ausführung eines erfindungsgemäßen Rohrelementes mit Außenkonusgewinde und mit Verdrehsicherung durch Stift
- **Fig.6a**: Weitere Ausführung eines erfindungsgemäßen Rohrelementes mit Innenkonusgewinde und mit Verdrehsicherung durch Stift
- **Fig.6b**: 3D-Darstellung angeschnitten zu 6a

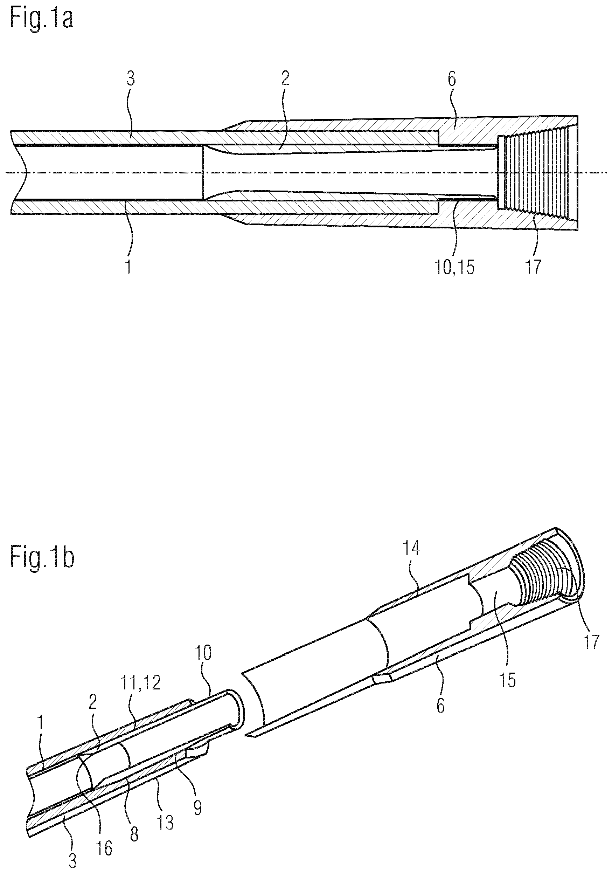

Nachfolgend werden die Figuren detaillierter beschrieben. **Fig.1a** zeigt ein Rohrelement, bei dem ein dünnes Innenrohr 1 mit dem Rohrmaterial des Rohres 3 umwickelt wurde. Als Rohrmaterial wird bevorzugt CFK verwendet. Das Rohr 3 ist an seinem Ende zwischen der innenliegenden Gegenhülse 2 und dem außenliegenden Metallverbinder 6 eingeklemmt und/oder verklebt. Gegenhülse 2 und Metallverbinder 6 sind über die zylindrischen Gewinde 10,15 miteinander verschraubt, so dass ein zuverlässiger und definierter Kontakt im Verbindungsbereich gewährleistet ist. Das konische Innengewinde 17 dient zur Verschraubung mit einem weiteren Rohrelement, das ein konisches Außengewinde besitzt. Auf der linken Seite ist die Darstellung abgeschnitten. Am nicht gezeigten Ende hat das Rohrelement bevorzugt einen ebenso befestigten zweiten Metallverbinder, der wiederum ein konisches Gewinde aufweist, zum Beispiel ein entsprechend passendes Außengewinde. So lassen sich lange Bohrgestänge, Rohrleitungen oder Antriebswellen aus mehreren Elementen zusammensetzen. Dadurch dass die Verbindung über das zylindrische Gewinde gewährleistet wird, lassen sich sehr schlanke Rohrelemente herstellen, die trotzdem eine hohe Festigkeit der Verbindung bieten. Bei der Herstellung wir zunächst das Innenrohr 1 mit Faserverstärkungsmaterial (z.B. Rovings, oder Gewebe- oder Gelegetapes) in mehreren Lagen umwickelt. Das Matrixmaterial (z.B. Epoxidharz oder ein anderes Duromer oder Thermoplast) kann bereits auf dem Faserverstärkungsmaterial vorhanden sein oder es wird beim oder nach dem Wickeln auf die Lagen aufgebracht. Die Gegenhülse 2 wird im Verbindungsbereich mit umwickelt. Danach wird das Rohr 3 zusammen mit dem Innenrohr 1 und der Gegenhülse thermisch in einem Ofen behandelt, so dass das Matrixmaterial aushärtet bzw. konsolidiert. Anschließend wir am Rohrende überstehendes Material abgetrennt und der Metallverbinder 6 mit seinem Gewinde 15 auf das zylindrische Gewinde 10 der Gegenhülse aufgeschraubt. Im Verbindungsbereich kann zuvor Kleber zwischen Rohr 3 und Metallverbinder 6 aufgebracht werden.

Anstatt des konischen Gewindes 17 kann der Metallverbinder auch einen Flansch aufweisen, der dazu dient das Rohrelement mit einem anderen Rohrelement zu verschrauben, zum Beispiel bei Antriebswellen. Die erfindungsgemäße Ausführung ist auch hierbei von Vorteil.

Das dargestellte Rohrelement eignet sich besonders für Bohrgestänge. Bei Bohrgestängen liegt der Gewindedurchmesser des zylindrischen Gewindes 10,15 meist zwischen 80 und 180 mm. Eine besonders bevorzugte Ausführungsform für ein Bohrgestänge in diesem Durchmesserbereich weist ein zylindrisches Gewinde mit einer Länge zwischen 50 und 150 mm auf. Unabhängig von der genannten Gewindelänge beträgt bei solchen Rohrelementen die axiale Länge des Verbindungsbereiches bevorzugt zwischen 150 und 250 mm.

In **Fig.1b** ist der Metallverbinder noch nicht angeschraubt. Um die Festigkeit der Verbindung zwischen Rohr 3 und Metallverbinder 6 noch weiter zu erhöhen, kann die Innen- und/oder die Außenseite des faserverstärkten Rohres 3 im Verbindungsbereich konisch zum Ende des Rohres hin zulaufend ausgeführt sein. Damit wird durch das Verschrauben des Metallverbinders 6 mit der Gegenhülse 2 eine Klemmkraft auf das Rohr 3 im Verbindungsbereich ausgeübt, so dass die Verbindung die nötige Festigkeit bekommt, um höhere Drehmomente und höhere Axialkräfte übertragen zu können. Es kann dabei auch bevorzugt nur ein Teil des Verbindungsbereiches als konische Fläche ausgeführt sein. In der dargestellten, bevorzugten Ausführung hat der Metallverbinder 6 einen sich konisch zum Rohr hin aufweitenden Verbindungsbereich 14 und das Rohr 3 hat an der Außenseite einen sich konisch entsprechend verjüngenden Verbindungsbereich 13. Auf der Innenseite des Rohres 3 kann der Verbindungsbereich 12 ebenfalls konisch zum Rohrende hin zulaufend ausgeführt sein. Der Verbindungsbereich 11 auf der Gegenhülse 2 ist dann entsprechend passend konisch ausgeführt. Die konischen Flächen im Verbindungsbereich können dabei eine gerade Kegelform oder eine bauchige Kegelform, also entlang einer gekrümmten Linie, aufweisen. Zusätzlich zur Klemmung kann der Metallverbinder 6 mit dem Rohr 3 im Verbindungsbereich 13,14 verklebt sein. Die Verklebung kann dabei auch eine Abdichtfunktion übernehmen zwischen Innenraum im Rohr und Umgebung. Um eine hohe Belastbarkeit der Gegenhülse zu erzielen und um Belastungsspitzen zu vermeiden, hat die Gegenhülse 2 im jeweiligen Randbereich des konischen Verbindungsbereiches 11 bevorzugt einen Radius als Übergang, zum Bereich des Gewindes 10 hin den konkaven Radius 9 und auf der anderen Seite den konvexen Radius 8.

Es ist auch möglich, dass nur auf der Innenseite des Rohres der Verbindungsbereich 12 oder nur auf dessen Außenseite der Verbindungsbereich 13 konisch ausgeführt ist. Wird nur die Außenseite konisch ausgeführt und ist die Innenseite zylindrisch, so kann die Gegenhülse 2 auch erst nach der thermischen Behandlung des Rohres 3 im Ofen eingesetzt werden.

Auf der Innenseite hat die Gegenhülse 2 ein strömungsoptimiertes Innenprofil 16, das den Druckverlust beim Durchströmen des Rohres gering hält. Erzielt wird das durch ein Innenprofil 16 in axialer Richtung, welches auf der gesamten Länge der Gegenhülse stetig verläuft, ohne Durchmessersprünge, sogenannte Stufensprünge und ohne Knicke oder Kanten. Der geringere Druckverlust ist bei Rohren zur Erdölförderung oder bei Bohrgestängen, durch die Bohrflüssigkeit mit hohem Druck gepumpt wird, von großem Vorteil. Das Innenrohr 1 kann mit einer Beschichtung versehen sein, die resistenter gegen Öl, Bohrflüssigkeit oder andere Chemikalien ist, und die den Reibungswiderstand der Rohrinnenwand auf die Strömung verringert.

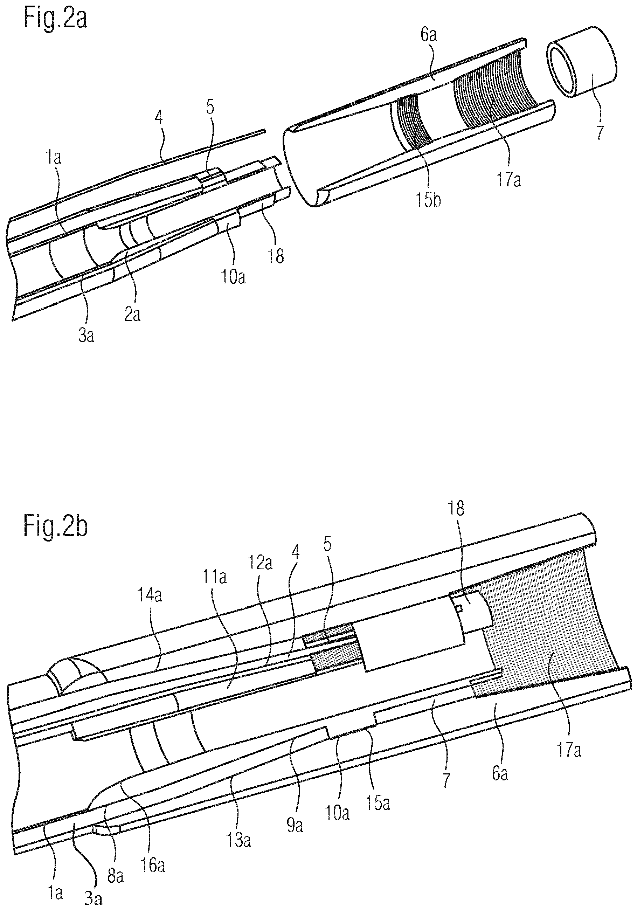

**Fig.2a** stellt ein Rohrelement mit Kabel 4 und Stecker 7 zur Daten- oder Energieübertragung dar. Gleiche Bezugszahlen bezeichnen gleichartige Komponenten. Im zylindrischen Gewinde 10 auf der Gegenhülse ist in dieser Ausführung eine Nut 5 vorhanden, in der das Kabel 4 geführt wird. Zur Veranschaulichung ist das Kabel 4 in der Explosionsdarstellung separat dargestellt, obwohl es erfindungsgemäß zwischen Innenrohr 1a und Rohr 3a bzw. innerhalb der Rohrwand des Rohres 3a verläuft und dann durch die Nut 5 bis zum Stecker 7. Als Alternative zur Nut 5 wäre auch eine Längsbohrung unter dem Gewinde hindurch möglich, in der das Kabel 4 vom Austritt aus dem Rohr 3a zum Stecker 7 geführt wird. Es können auch mehrere Kabel oder Kabelstränge auf dieselbe Art durch Nuten oder Bohrungen, die am Umfang verteilt sind, durch den Gewindebereich durchgeführt werden. In jedem Fall ist das Kabel 4 vor Beschädigungen beim Zusammenschrauben des zylindrischen Gewindes geschützt. Um Platz für den Stecker 7 zu bieten ragt die Gewindehülse 2a noch über das Gewinde 10a hinaus. Sie bildet dadurch ein Schutzschild 18 aus für den Stecker 7 gegenüber dem Innenraum des Rohrelementes. Ebenso hat der Metallverbinder 6a einen Bereich zwischen zylindrischem Gewinde 15a und konischem Gewinde 17a, um den Stecker aufzunehmen.

**Fig.2b** zeigt das Rohrelement im zusammengebauten Zustand. Der Stecker 7 befindet sich radial gesehen vollständig zwischen dem Schutzschild 18 und dem Metallverbinder 6a. Wird das Rohrelement über das konische Gewinde 17a mit einem anderen Rohrelement verschraubt, welches einen passenden Stecker aufweist, kann eine Daten- oder Energieübertragung erfolgen. Das am Stecker 7 angeschlossene Kabel 4 verläuft durch das Gewinde in der Nut 5 und dann innerhalb der Wand des Rohres 3a bis zum anderen Ende des Rohres (nicht dargestellt). Alternativ zur Nut 5 könnte das Kabel 4 auch in einer Längsbohrung unter dem Gewinde durchgeführt werden. Durch den konischen Verlauf der Verbindungsbereiche 11a,12a und 13a,14a wird durch das Verschrauben der zylindrischen Gewinde 10a,15a eine ausreichende Presskraft auf die Rohrwand des Rohres 3a ausgeübt, so dass die Verbindung höhere Drehmomente und Axialkräfte übertragen kann. Damit keine Belastungsspitzen auftreten sind die Übergangsbereiche des konischen Verbindungsbereiches 11a auf der Gegenhülse mit Radien 8a und 9a ausgeführt. Das Innenprofil 16 der Gegenhülse ist wiederum strömungsoptimiert ohne Stufensprünge und ohne Kanten oder Knicke ausgeführt.

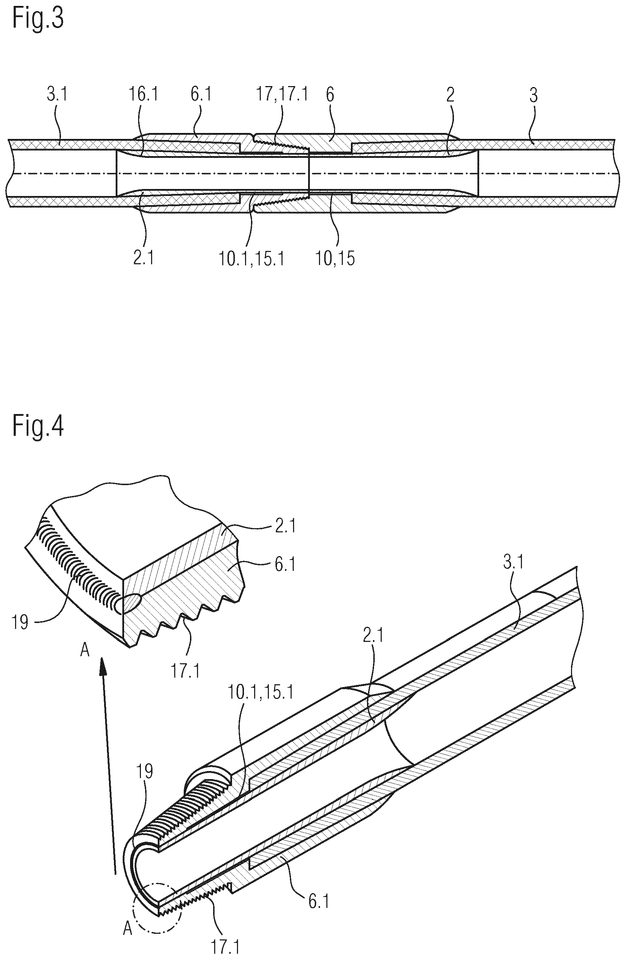

In **Fig.3** sind zwei miteinander verschraubte Rohrelemente dargestellt. Das eine Rohrelement hat ein konisches Außengewinde 17.1, das andere ein konisches Innengewinde 17. Die Verbindung zwischen Metallverbinder 6, 6.1 und Rohr 3, 3.1 erfolgt in der gleichen Art und Weise, indem die Metallverbinder über die zylindrischen Gewinde 10,15 und 10.1, 15.1 auf der jeweiligen Gegenhülse 2, 2.1 verschraubt werden. Auch das Innenprofil 16.1 kann wieder strömungsoptimiert ausgeführt werden. Zu erkennen ist wiederum, die konische Ausgestaltung der Verbindungsbereiche, um eine höhere Presskraft zu erzeugen.

**Fig.4** zeigt ein Rohrelement mit konischem Außengewinde 17.1, welches eine Verdrehsicherung in Form einer ringförmigen Schweißnaht 19 aufweist. Durch die Verdrehsicherung wird gewährleistet, dass sich der Metallverbinder 6.1 nicht mehr von der Gegenhülse 2.1 lösen kann, auch nicht wenn über die Verschraubung 17 Drehmomentkräfte eingebracht werden. Die Verdrehsicherung durch eine Schweißnaht läßt sich genauso bei anderen erfindungsgemäßen Rohrelementen anwenden. Der Ausschnitt A zeigt die Schweißnaht 19 in Vergrößerung.

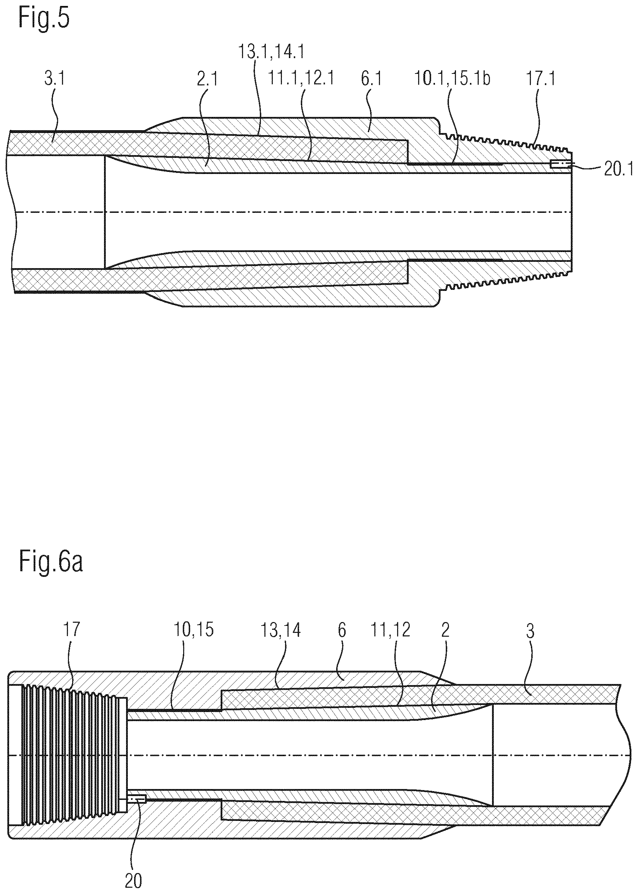

Das in **Fig.5** dargestellte Rohrelement weist eine andere Art der Verdrehsicherung auf, nämlich indem ein Stift 20.1 axial in eine Bohrung am Übergang zwischen Gegenhülse 2.1 und Metallverbinder 6.1 eingesetzt ist. Auch hier sind wieder die konischen Verbindungsbereiche 11.1, 12.1 und 13.1, 14.1 zu erkennen, wobei die Verbindungsbereiche 12.1 und 13.1 zum Rohrende konisch zulaufend ausgeführt sind.

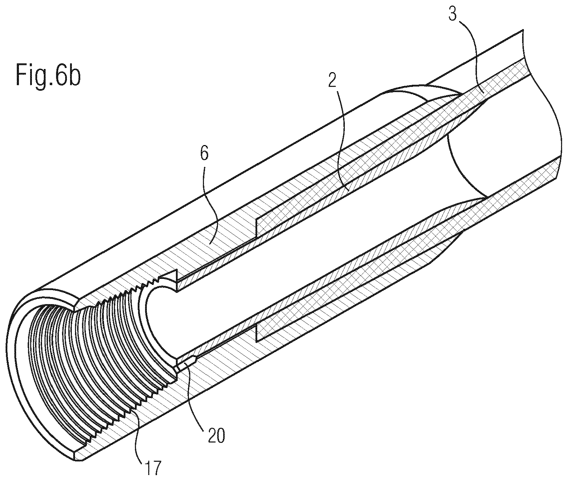

**Fig.6a** zeigt wieder ein Rohrelement mit konischem Außengewinde 17. Die Verdrehsicherung ist hier durch eine Stift 20 am Übergang zwischen Gegenhülse 2 und Metallverbinder 6 eingesetzt. Alle Varianten zur Verdrehsicherung lassen sich auch auf die Rohrelemente mit Stecker übertragen. In der perspektivischen Darstellung in **Fig.6b** ist die Ausführung der Verdrehsicherung als Stift 20 gut zu erkennen.

### Bezugszeichenliste

- 1,1a: Innenrohr
- 2,2.1,2a: Gegenhülse
- 3,3.1,3a: CFK-Rohr
- 4: Kabel
- 5: Aussparung im Gewinde für Kabel
- 6,6.1,6a: Metallverbinder
- 7: Stecker
- 8,8a: konvexer Radius außen auf Gegenhülse
- 9,9a: konkaver Radius außen auf Gegenhülse
- 10,10.1,10a: zylindrisches Außengewinde auf Gegenhülse
- 11,11.1,11a: Verbindungsbereich der Gegenhülse
- 12,12.1,12a: Verbindungsbereich an der Innenseite des CFK-Rohres
- 13,13.1,13a: Verbindungsbereich an der Außenseite des CFK-Rohres
- 14,14.1,14a: Verbindungsbereich des Metallverbinders
- 15,15.1,15a: zylindrisches Innengewinde am Metallverbinder
- 16,16.1,16a: stetiges Innenprofil
- 17, 17a: konisches Innengewinde des Metallverbinders
- 17.1: konisches Außengewinde des Metallverbinders
- 18: Schutzschild für Stecker
- 19: Schweißnaht
- 20,20.1: Stift zur Verdrehsicherung

## Patentansprüche

1. Rohrelement, welches ein Rohr (3,3.1,3a) aus faserverstärktem Kunststoff und zumindest einen Metallverbinder (6,6.1,6a) aufweist, welcher so mit dem Rohr (3,3.1,3a) verbunden ist, dass die Verbindung Drehmomente und Axialkräfte übertragen kann, und welcher ein Gewinde (17,17.1,17a), insbesondere ein konisches Gewinde, oder einen Flansch aufweist, über das oder den der Metallverbinder (6,6.1,6a) mit einem anderen Metallverbinder eines weiteren Rohrelementes verschraubt werden kann, um zwei Rohrelemente zu verbinden, **dadurch gekennzeichnet, dass** der Metallverbinder (6,6.1,6a) mit einem Verbindungsbereich (14,14.1,14a) das Rohr (3,3.1,3a) außen umschließt, dass eine Gegenhülse (2,2.1,2a) mit einem Verbindungsbereich (11,11.1,11a) vorhanden ist, der Kontakt zur Innenseite des Rohres (3,3.1,3a) hat, und dass der Metallverbinder (6,6.1,6a) und die Gegenhülse (2,2.1,2a) je ein zylindrisches Gewinde (10,10.1,10a,15,15.1,15a) aufweisen, über die sie miteinander verschraubt sind.

2. Rohrelement nach Anspruch 1
**dadurch gekennzeichnet,**
**dass** am dem Metallverbinder (6,6.1,6a) gegenüberliegenden Ende des Rohres (3.3.1,3a) ein zweiter Metallverbinder (6,6.1,6a) vorhanden ist, der genauso mit dem Rohr verbunden ist wie der erste Metallverbinder (6,6.1,6a).

3. Rohrelement nach Anspruch 1 oder 2
**dadurch gekennzeichnet,**
**dass** das Rohr (3,3.1,3a) auf der Außenseite einen Verbindungsbereich (13,13.1,13a) aufweist, der eine konisch zum Rohrende hin zulaufende Fläche darstellt und der mit dem Verbindungsbereich (14,14.1,14a) des Metallverbinders in Kontakt ist, wobei dieser Verbindungsbereich (14,14.1,14a) als entsprechend passende konisch geformte Fläche ausgebildet ist.

4. Rohrelement nach Anspruch 3
**dadurch gekennzeichnet,**
**dass** der Steigungswinkel des Konus auf der Außenseite des Rohres im Verbindungsbereich (13,13.1,13a) mit dem Metallverbinder (6,6.1,6a) zwischen 0,1° und 30°, bevorzugt zwischen 0,5° und 5°, bezogen auf die Achse des Rohres beträgt.

5. Rohrelement nach einem der vorherigen Ansprüche
**dadurch gekennzeichnet,**
**dass** das Rohr (3,3.1,3a) auf der Innenseite einen Verbindungsbereich (12,12.1,12a) aufweist, der eine konisch zum Rohrende hin zulaufend Fläche darstellt und der mit dem Verbindungsbereich (11,11.1,11a) der Gegenhülse in Kontakt ist, wobei dieser als entsprechend passende konisch geformte Fläche ausgebildet ist.

6. Rohrelement nach Anspruch 5
**dadurch gekennzeichnet,**
**dass** der Steigungswinkel des Konus auf der Innenseite des Rohres im Verbindungsbereich (12,12.1,12a) mit der Gegenhülse (2,2.1,2a) zwischen 0,1° und 30°, bevorzugt zwischen 0,5° und 5°, bezogen auf die Achse des Rohres beträgt.

7. Rohrelement nach einem der vorherigen Ansprüche
**dadurch gekennzeichnet,**
**dass** ein Innenrohr (1,1a) vorhanden ist, insbesondere aus Metall oder faserverstärktem Kunststoff und bevorzugt mit einer Beschichtung auf der Innenseite versehen, die aus einem gegen Öl oder andere Chemikalien resistenteren Material als das Innenrohr besteht, wobei das Rohr (3,3.1,3a) auf das Innenrohr (1,1a) aufgewickelt ist, und wobei das Innenrohr (1,1a) eine geringere Wandstärke als das Rohr (3,3.1,3a) hat.

8. Rohrelement nach einem der vorherigen Ansprüche
**dadurch gekennzeichnet,**
**dass** in der Wand des Rohres (3,3.1,3a) oder zwischen Innenrohr (1,1a) und Rohr (3,3.1,3a) ein Kabel (4) vorhanden ist, das sich von einem Rohrende zum anderen Rohrende erstreckt und das mit einem Stecker (7) verbunden, der sich innerhalb des Metallverbinders (6,6.1,6a) befindet und der geeignet ist, eine elektrische Verbindung zu einem anderen Stecker oder Kabel in einem weiterem Rohrelemente herzustellen, wenn das Rohrelement mit dem weiteren Rohrelement über das konische Gewinde (17,17.1,17a) oder den Flansch verschraubt ist.

9. Rohrelement nach Anspruch 8
**dadurch gekennzeichnet,**
**dass** die Gegenhülse (2,2.1,2a) ein an dem zum Verbindungsbereich (11,11.1,11a) gegenüberliegenden Ende der Gegenhülse angeordnetes Schutzschild (18) aufweist, welches derart ausgeführt ist, dass der Stecker (7) in radialer Richtung gesehen vollständig zwischen Metallverbinder (6,6.1,6a) und Gegenhülse (2,2.1,2a) liegt.

10. Rohrelement nach einem Anspruch 8 oder 9
**dadurch gekennzeichnet,**
**dass** die Gegenhülse (2,2.1,2a) eine axiale Nut im zylindrischen Gewinde (10,10.1,10a) oder eine axiale Längsbohrung im Material unter dem zylindrischen Gewinde (10,10.1,10a) aufweist, durch welche das Kabel (4) vom Rohr (3,3.1,3a) zum Stecker (7) geführt ist.

11. Rohrelement nach einem der vorherigen Ansprüche
**dadurch gekennzeichnet,**
**dass** eine Verdrehsicherung zwischen Gegenhülse (2,2.1,2a) und Metallverbinder (6,6.1,6a) vorgesehen ist, die insbesondere als Schweißnaht (19), bevorzugt an der Stirnfläche der Gegenhülse, oder als zumindest ein in axialer Richtung eingesetzter Stift (20,20.1) ausgeführt ist.

12. Rohrelement nach einem der vorherigen Ansprüche
**dadurch gekennzeichnet,**
**dass** die Innenfläche der Gegenhülse (2,2.1,2a) ein in axialer Richtung komplett stetig verlaufendes Innenprofil (16,16.1,16a) ohne Kanten oder Stufensprünge aufweist.

13. Verfahren zur Herstellung eines Rohrelementes, welches nach einem der vorherigen Ansprüche gestaltet ist,
**dadurch gekennzeichnet,**
- **dass** das Rohr (3,3.1,3a) durch Wickeln von Fasermaterial um einen Kern, insbesondere auf einem Innenrohr(1,1a), hergestellt wird,
- **dass** die Gegenhülse (2,2.1,2a) im Verbindungsbereich (11,11.1,11a) beim Herstellen des Rohres mit dem Fasermaterial überwickelt wird,
- **dass** Matrixmaterial zusammen mit oder nach dem Fasermaterial aufgebracht wird
- **dass** das Rohr (3,3.1,3a) zusammen mit der Gegenhülse in einem Ofen thermisch behandelt wird, wobei das Matrixmaterial aushärtet oder konsolidiert,
- und **dass** der Metallverbinder (6,6.1,6a) mit seinem zylindrischen Gewinde (15,15.1,15a) auf das zylindrische Gewinde (10,10.1,10a) der Gegenhülse aufgeschraubt wird.

14. Verfahren nach Anspruch 13
**dadurch gekennzeichnet,**
**dass** ein Kabel (4) axial von einem Ende bis zum anderen Ende auf dem Innenrohr (1,1a) aufgebracht wird, bevor das Rohr (3,3.1,3a) durch Wickeln hergestellt wird, und dass ein Stecker (7) auf die Gegenhülse (2,2.1,2a) geschoben und mit dem Kabel (4) elektrisch verbunden wird, bevor der Metallverbinder (6,6.1,6a) aufgeschraubt wird.

15. Verfahren nach Anspruch 13
**dadurch gekennzeichnet,**
**dass** ein Kabel (4) axial von einem Ende bis zum anderen Ende auf bereits gewickelten Lagen des Rohres aufgebracht wird, bevor das Rohr (3,3.1,3a) durch weiteres Wickeln fertiggestellt wird, und dass ein Stecker (7) auf die Gegenhülse (2,2.1,2a) geschoben und mit dem Kabel (4) elektrisch verbunden wird, bevor der Metallverbinder (6,6.1,6a) aufgeschraubt wird.

## Claims

1. Pipe element which has a pipe (3,3.1,3a) of fibre-reinforced plastics material and at least one metal connector (6,6.1,6a) and which is connected to the pipe (3,3.1,3a) in such a manner that the connection can transmit torques and axial forces, and which has a thread (17,17.1,17a), in particular a conical thread, or a flange, by means of which the metal connector (6,6.1,6a) can be screwed to another metal connector of another pipe element in order to connect two pipe elements, **characterized in that** the metal connector (6,6.1,6a) surrounds the pipe (3,3.1,3a) at the outer side with a connection region (14,14.1,14a), **in that** a counter-sleeve (2,2.1,2a) is provided with a connection region (11,11.1,11a) which has contact with the inner side of the pipe (3,3.1,3a), and **in that** the metal connector (6,6.1,6a) and the counter-sleeve (2,2.1,2a) each have a cylindrical thread (10,10.1,10a,15,15.1,15a) by means of which they are screwed to each other.

2. Pipe element according to Claim 1,
**characterized in that**,
at the end of the pipe (3,3.1,3a) opposite the metal connector (6,6.1,6a), there is provided a second metal connector (6,6.1,6a) which is connected to the pipe in the same manner as the first metal connector (6,6.1,6a).

3. Pipe element according to Claim 1 or Claim 2,
**characterized in that**
the pipe (3,3.1,3a) has at the outer side a connection region (13,13.1,13a) which constitutes a face which tapers conically in the direction toward the pipe end and which is in contact with the connection region (14,14.1,14a) of the metal connector, wherein this connection region (14,14.1,14a) is constructed as a correspondingly fitting conically shaped face.

4. Pipe element according to Claim 3,
**characterized in that**
the inclination angle of the cone at the outer side of the pipe in the connection region (13, 13.1, 13a) with respect to the metal connector (6,6.1,6a) is between 0.1° and 30°, preferably between 0.5° and 5°, with respect to the axis of the pipe.

5. Pipe element according to one of the preceding claims,
**characterized in that**
the pipe (3,3.1,3a) has at the inner side a connection region (12,12.1,12a) which constitutes a face which tapers conically in the direction toward the pipe end and which is in contact with the connection region (11,11.1,11a) of the counter-sleeve, wherein the region is constructed as a correspondingly fitting conically shaped face.

6. Pipe element according to Claim 5,
**characterized in that**
the inclination angle of the cone at the inner side of the pipe in the connection region (12,12.1,12a) with respect to the counter-sleeve (2,2.1,2a) is between 0.1° and 30°, preferably between 0.5° and 5°, with respect to the axis of the pipe.

7. Pipe element according to one of the preceding claims,
**characterized in that**
an inner pipe (1, 1a) is provided, in particular of metal or fibre-reinforced plastics material and preferably provided at the inner side with a coating, which comprises a material which is more resistant than the inner pipe with respect to oil or other chemicals, wherein the pipe (3,3.1,3a) is wound on the inner pipe (1, 1a), and wherein the inner pipe (1, 1a) has a smaller wall thickness than the pipe (3,3.1,3a).

8. Pipe element according to one of the preceding claims,
**characterized in that**
there is provided in the wall of the pipe (3,3.1,3a) or between the inner pipe (1, 1a) and pipe (3,3.1,3a) a cable (4) which extends from one pipe end to the other pipe end and which is connected to a connector (7) which is located inside the metal connector (6,6.1,6a) and which is suitable for producing an electrical connection with respect to another connector or cable in another pipe element when the pipe element is screwed to the other pipe element via the conical thread (17,17.1,17a) or the flange.

9. Pipe element according to Claim 8,
**characterized in that**
the counter-sleeve (2,2.1,2a) has a protective shield (18) which is arranged at the end of the counter-sleeve opposite the connection region (11,11.1,11a) and which is constructed in such a manner that the connector (7) when viewed in a radial direction is located completely between the metal connector (6,6.1,6a) and the counter-sleeve (2,2.1,2a).

10. Pipe element according to Claim 8 or Claim 9,
**characterized in that**
the counter-sleeve (2,2,1,2a) has an axial groove in the cylindrical thread (10,10.1,10a) or an axial longitudinal hole in the material below the cylindrical thread (10,10.1,10a), through which the cable (4) is guided from the pipe (3,3.1,3a) to the connector (7).

11. Pipe element according to one of the preceding claims,
**characterized in that**
there is provided between the counter-sleeve (2,2.1,2a) and the metal connector (6,6.1,6a) a torsion prevention means which is in particular constructed as a weld seam (19), preferably at the end face of the counter-sleeve, or as at least one pin (20,20.1) which is inserted in an axial direction.

12. Pipe element according to one of the preceding claims,
**characterized in that**
the inner face of the counter-sleeve (2,2.1,2a) has an inner profile (16,16.1,16a) which extends in a completely continuous manner in an axial direction without edges or gradations.

13. Method for producing a pipe element which is constructed in accordance with one of the preceding claims,
**characterized in that**
- the pipe (3,3.1,3a) is produced by fibre material being wound around a core, in particular on an inner pipe (1, 1a),
- **in that** the fibre material is wound over the counter-sleeve (2,2.1,2a) in the connection region (11,11.1,11a) when the pipe is produced,
- **in that** matrix material is applied together with or after the fibre material,
- **in that** the pipe (3,3.1,3a) is thermally processed together with the counter-sleeve in a furnace, wherein the matrix material hardens or is consolidated,
- and **in that** the metal connector (6,6.1,6a) is screwed with the cylindrical thread (15,15.1,15a) thereof onto the cylindrical thread (10,10.1,10a) of the counter-sleeve.

14. Method according to Claim 13,
**characterized in that**
a cable (4) is applied in an axial manner from one end to the other end to the inner pipe (1, 1a) before the pipe (3,3.1,3a) is produced by winding, and **in that** a connector (7) is fitted onto the counter-sleeve (2,2.1,2a) and electrically connected to the cable (4) before the metal connector (6,6.1,6a) is screwed on.

15. Method according to Claim 13,
**characterized in that**
a cable (4) is applied axially from one end to the other end to layers of the pipe which are already wound before the pipe (3,3.1,3a) is finished by means of further winding, and **in that** a connector (7) is fitted on the counter-sleeve (2,2.1,2a) and electrically connected to the cable (4) before the metal connector (6, 6.1, 6a) is screwed on.

## Revendications

1. Elément tubulaire, qui présente un tube (3, 3.1, 3a) en matière plastique renforcée par des fibres et au moins un raccord métallique (6, 6.1, 6a), qui est assemblé au tube (3, 3.1, 3a) de telle manière que l'assemblage puisse transmettre des couples de rotation et des efforts axiaux, et qui présente un filet (17, 17.1, 17a), en particulier un filet conique, ou une bride, par lequel ou laquelle le raccord métallique (6, 6.1, 6a) peut être vissé à un autre raccord métallique d'un autre élément tubulaire, afin de relier deux éléments tubulaires, **caractérisé en ce que** le raccord métallique (6, 6.1, 6a) entoure le tube (3, 3.1, 3a) par l'extérieur avec une région d'assemblage (14, 14.1, 14a), **en ce qu'**il se trouve une contre-douille (2, 2.1, 2a) avec une région d'assemblage (11, 11.1, 11a), qui est en contact avec le côté intérieur du tube (3, 3.1, 3a), et **en ce que** le raccord métallique (6, 6.1, 6a) et la contre-douille (2, 2.1, 2a) présentent chacun(e) un filet cylindrique (10, 10.1, 10a, 15, 15.1, 15a), au moyen duquel ils sont vissés l'un l'autre.

2. Elément tubulaire selon la revendication 1, **caractérisé en ce qu'**il se trouve à l'extrémité du tube (3, 3.1, 3a) opposée au raccord métallique (6, 6.1, 6a) un deuxième raccord métallique (6, 6.1, 6a), qui est assemblé au tube exactement de la même manière que le premier raccord métallique (6, 6.1, 6a).

3. Elément tubulaire selon la revendication 1 ou 2, **caractérisé en ce que** le tube (3, 3.1, 3a) présente sur le côté extérieur une région d'assemblage (13, 13.1, 13a), qui représente une face se terminant en cône vers l'extrémité du tube et qui est en contact avec la région d'assemblage (14, 14.1, 14a) du raccord métallique, dans lequel cette région d'assemblage (14, 14.1, 14a) est réalisée sous la forme d'une face de forme conique s'adaptant de façon correspondante.

4. Elément tubulaire selon la revendication 3, **caractérisé en ce que** l'angle d'inclinaison du cône sur le côté extérieur du tube dans la région d'assemblage (13, 13.1, 13a) avec le raccord métallique (6, 6.1, 6a) se situe entre 0,1° et 30°, de préférence entre 0,5° et 5°, par rapport à l'axe du tube.

5. Elément tubulaire selon l'une quelconque des revendications précédentes, **caractérisé en ce que** le tube (3, 3.1, 3a) présente sur le côté intérieur une région d'assemblage (12, 12.1, 12a), qui représente une face se terminant en cône vers l'extrémité du tube et qui est en contact avec la région d'assemblage (11, 11.1, 11a) de la contre-douille, dans lequel celle-ci est réalisée sous la forme d'une face de forme conique s'adaptant de façon correspondante.

6. Elément tubulaire selon la revendication 5, **caractérisé en ce que** l'angle d'inclinaison du cône sur le côté intérieur du tube dans la région d'assemblage (12, 12.1, 12a) avec la contre-douille (2, 2.1, 2a) se situe entre 0,1° et 30°, de préférence entre 0,5° et 5°, par rapport à l'axe du tube.

7. Elément tubulaire selon l'une quelconque des revendications précédentes, **caractérisé en ce qu'**il se trouve un tube intérieur (1, 1a), en particulier en métal ou en matière plastique renforcée par des fibres et de préférence muni sur le côté intérieur d'un revêtement, qui se compose d'un matériau plus résistant à l'huile ou à d'autres produits chimiques que le tube intérieur, dans lequel le tube (3, 3.1, 3a) est enroulé sur le tube intérieur (1, 1a), et dans lequel le tube intérieur (1, 1a) présente une épaisseur de paroi plus faible que le tube (3, 3.1, 3a).

8. Elément tubulaire selon l'une quelconque des revendications précédentes, **caractérisé en ce qu'**il se trouve dans la paroi du tube (3, 3.1, 3a) ou entre le tube intérieur (1, 1a) et le tube (3, 3.1, 3a) un câble (4), qui s'étend d'une extrémité du tube à l'autre extrémité du tube et qui est raccordé à une fiche (7), qui se trouve à l'intérieur du raccord métallique (6, 6.1, 6a) et qui convient pour établir une connexion électrique avec une autre fiche ou un autre câble dans un autre élément tubulaire, lorsque l'élément tubulaire est vissé à l'autre élément tubulaire au moyen du filet conique (17, 17.1, 17a) ou de la bride.

9. Elément tubulaire selon la revendication 8, **caractérisé en ce que** la contre-douille (2, 2.1, 2a) présente un blindage de protection (18) disposé sur l'extrémité de la contre-douille opposée à la région d'assemblage (11, 11.1, 11a), qui est réalisé de telle manière que la fiche (7) considérée en direction radiale se situe entièrement entre le raccord métallique (6, 6.1, 6a) et la contre-douille (2, 2.1, 2a).

10. Elément tubulaire selon une des revendications 8 ou 9, **caractérisé en ce que** la contre-douille (2, 2.1, 2a) présente une rainure axiale dans le filet cylindrique (10, 10.1, 10a) ou un alésage longitudinal axial dans le matériau situé en dessous du filet cylindrique (10, 10.1, 10a), à travers lequel/laquelle le câble (4) est guidé par le tube (3, 3.1, 3a) jusqu'à la fiche (7).

11. Elément tubulaire selon l'une quelconque des revendications précédentes, **caractérisé en ce qu'**il est prévu une sécurité de rotation entre la contre-douille (2, 2.1, 2a) et le raccord métallique (6, 6.1, 6a), qui est réalisée en particulier en forme de cordon de soudure (19), de préférence sur la face frontale de la contre-douille, ou en forme d'au moins une tige (20, 20.1) introduite en direction axiale.

12. Elément tubulaire selon l'une quelconque des revendications précédentes, **caractérisé en ce que** la face intérieure de la contre-douille (2, 2.1, 2a) présente un profil intérieur (16, 16.1, 16a) s'étendant de façon complètement continue sans arêtes ou sauts étagés.

13. Procédé de fabrication d'un élément tubulaire, qui est configuré selon l'une quelconque des revendications précédentes, **caractérisé en ce que**
- on fabrique le tube (3, 3.1, 3a) par enroulement de matériau fibreux autour d'un noyau, en particulier sur un tube intérieur (1, 1a),
- on enveloppe en plus la contre-douille (2, 2.1, 2a) avec le matériau fibreux dans la région d'assemblage (11, 11.1, 11a) pendant la fabrication du tube,
- on dépose un matériau de matrice en même temps que ou après le matériau fibreux,
- on traite thermiquement le tube (3, 3.1, 3a) en même temps que la contre-douille dans un four, dans lequel on durcit ou on consolide le matériau fibreux, et
- on visse le raccord métallique (6, 6.1, 6a) avec son filet cylindrique (15, 15.1, 15a) sur le filet cylindrique (10, 10.1, 10a) de la contre-douille.

14. Procédé selon la revendication 13, **caractérisé en ce que** l'on dépose un câble (4) axialement d'une extrémité à l'autre extrémité sur le tube intérieur (1, 1a), avant que le tube (3, 3.1, 3a) soit fabriqué par enroulement, et **en ce que** l'on glisse une fiche (7) sur la contre-douille (2, 2.1, 2a) et on la raccorde électriquement au câble (4), avant que le raccord métallique (6, 6.1, 6a) soit vissé.

15. Procédé selon la revendication 13, **caractérisé en ce que** l'on dépose un câble (4) axialement d'une extrémité à l'autre extrémité sur des couches déjà enroulées du tube, avant que le tube (3, 3.1, 3a) soit terminé par nouvel enroulement, et **en ce que** l'on glisse une fiche (7) sur la contre-douille (2, 2.1, 2a) et on la raccorde électriquement au câble (4), avant que le raccord métallique (6, 6.1, 6a) soit vissé.
